# FASCICULE DE BREVET EUROPEEN

(11) **EP 4 043 199 B1**
(45) Date de publication et mention de la délivrance du brevet: **25.06.2025**
(21) Numéro de dépôt: 22154793.8
(22) Date de dépôt: 02.02.2022
(51) Int. Cl.: B32B 1/08, B32B 3/02, B32B 3/04, B32B 3/10, B32B 3/14, B32B 3/16, B32B 5/08, B32B 5/12, B32B 5/26, B32B 7/05, B32B 7/12, B32B 19/02

(54) **BANDE MULTICOUCHE MULTI LARGEURS POUR BOBINAGE AVEC CHANGEMENT PROGRESSIF DE L'ANGLE DE DÉPOSE**
MEHRSCHICHTIGES BAND MIT MEHREREN BREITEN ZUM AUFWICKELN MIT STUFENLOSER ÄNDERUNG DES ABLAGEWINKELS
MULTILAYER STRIP WITH MULTIPLE WIDTHS FOR WINDING AND PROGRESSIVE CHANGE OF THE DEPOSITING ANGLE

(30) Priorité: 11.02.2021 FR 2101310
(43) Date de publication de la demande: 17.08.2022
(73) Titulaire: ArianeGroup SAS, 78130 Les Mureaux (FR)
(72) Inventeur: PAGES-XATART, Guillaume, 33185 LE HAILLAN (FR)
(74) Mandataire: Cabinet Beau de Loménie

(56) Documents cités:
- EP-A1- 3 418 046
- WO-A1-2012/010805
- US-A1- 2019 276 616

## Description

### Domaine Technique

La présente invention se rapporte au domaine général des procédés de fabrication de pièces en matériau composite mettant en œuvre notamment le bobinage de bandes de tissus pré-imprégnées avec un changement d'angle de dépose.

### Technique antérieure

Les pièces de protection thermique de type ablatif sont classiquement utilisées pour protéger thermiquement les structures ou véhicules auxquels elles sont incorporées.

Les pièces de protection thermique de type ablatif sont généralement réalisées par bobinage de tissus pré-imprégnés afin de former une structure stratifiée, qui sera ensuite durcie et consolidée. Ainsi, les couches déposées sont classiquement appliquées en enroulant une ou plusieurs bandes de tissu autour d'une forme, par exemple un mandrin, avec un angle de dépose fixe par rapport à l'axe de révolution de la forme. Par « angle de dépose », on désigne ici l'angle formé entre l'axe de révolution de la forme et la couche appliquée. La structure stratifiée est ensuite durcie et consolidée.

L'angle de stratification des couches par rapport à la surface de la forme influence directement les propriétés thermomécaniques de la structure. Par « angle de stratification », on désigne ici l'angle formé entre la surface de la forme et la couche appliquée. Il est donc nécessaire de contrôler la valeur de cet angle.

La modification de l'angle de stratification peut être nécessaire dans différents cas, par exemple quand la forme à bobiner présente des changements d'angle par rapport à son axe de révolution, ou encore lorsque des parties de la pièce bobinée doivent supporter des sollicitations dans des directions principales différentes.

Lorsque la forme à bobiner est entièrement cylindrique ou conique, c'est-à-dire sans changement d'angle par rapport à son axe de révolution, l'angle de stratification et l'angle de dépose sont constants, voire confondus dans le cas d'une forme cylindrique. Ainsi, un bobinage avec un angle de dépose fixe permet facilement d'obtenir une structure stratifiée avec un angle de stratification satisfaisant sur toute la longueur de la forme par rapport à une sollicitation donnée.

En revanche, lorsque la forme a une géométrie qui présente des changements d'angle par rapport à son axe de révolution, un bobinage avec un angle de dépose fixe va entraîner des variations de la valeur de l'angle de stratification. En conséquence, l'angle de stratification ne pourra pas être satisfaisant sur toute la longueur de la forme par rapport à une sollicitation donnée. Ainsi, pour obtenir un angle de stratification satisfaisant sur toute la longueur de la forme, l'angle de dépose doit être modifié.

Pour procéder à la modification de l'angle de dépose, une première méthode consiste à fabriquer les différentes portions de la structure finale séparément, chaque portion correspondant à une forme conique ou cylindrique simple. Chaque portion est ainsi bobinée avec un angle de dépose fixe, mais qui correspond à un angle de stratification satisfaisant pour cette portion. Les différentes portions sont ensuite durcies et leurs extrémités sont usinées de sorte à permettre l'assemblage de la structure finale. Cette méthode est longue et coûteuse à mettre en œuvre. En outre, cette méthode n'est pas toujours applicable, notamment lorsque la forme finale à bobiner ne peut pas être découpée en portions.

Afin de pouvoir bobiner directement sur la forme finale, le procédé décrit par le document US6195984 propose de réaliser un bobinage avec un premier angle de dépose fixe sur une partie de la forme, associée à un premier angle de stratification satisfaisant par rapport aux sollicitations prévues. La structure stratifiée ainsi obtenue est alors durcie, puis usinée selon un deuxième angle de stratification satisfaisant, associé à la partie suivante de la forme. Un deuxième bobinage avec un deuxième angle de dépose fixe est ensuite réalisé sur la partie suivante de la forme, associée au deuxième angle de stratification satisfaisant, depuis la surface usinée.

Ce procédé reste cependant coûteux et difficile à mettre en œuvre, notamment du fait de l'opération d'usinage. En outre, le changement d'angle de dépose brutal au sein de la structure finale ainsi obtenue peut engendrer des comportements thermomécaniques problématiques au niveau de l'interface.

Afin de résoudre ces problématiques, le document US2004081783 propose de faire varier progressivement l'angle de dépose le long de la forme. Le changement d'angle de dépose est réalisé par l'utilisation d'une ou plusieurs bandes de tissu pré-imprégné de largeur inférieure à celles des autres bandes de tissu utilisées.

Le procédé comprend donc une première étape de bobinage classique, selon un premier angle de dépose fixe, sur une partie de la forme associée à un premier angle de stratification satisfaisant. On bobine ensuite une ou plusieurs bandes de tissu ayant une largeur inférieure en s'appuyant sur le précédent bobinage, soit toujours selon le premier angle de dépose.

La structure formée par ces bandes de tissu moins larges est similaire à une structure de rampe d'angle θ, autrement dite en forme d'escaliers de pente θ.

On procède ensuite à un nouveau bobinage, en reprenant des bandes de tissu de largeur classique, en s'appuyant sur la structure de rampe précédemment créée. Ainsi, ce nouveau bobinage sera selon un nouvel angle de dépose fixe, correspondant à la valeur du premier angle de dépose retranché de la valeur de l'angle θ de la rampe introduite.

Ainsi, en introduisant à plusieurs reprises ces structures de rampe au cours du bobinage de la forme, il est possible de procéder à un changement progressif dans l'angle de dépose. Ce procédé permet donc d'obtenir un angle de stratification satisfaisant en tout point de la forme par rapport à une future sollicitation prédéterminée, et ainsi une stratification très satisfaisante d'un point de vue thermomécanique.

En revanche, l'application successive de bandes de largeurs différentes reste une opération assez longue, avec une mauvaise répétabilité et des difficultés pour une réalisation automatisée. En outre, si le changement d'angle de dépose reste plus progressif que dans les précédentes méthodes, une variation plus progressive encore de l'angle de stratification serait souhaitable.

Le document EP3418046 décrit une bande multicouche destinée à être utilisée pour fabriquer une pièce en matériau composite par bobinage.

### Exposé de l'invention

La présente invention a pour but de remédier aux inconvénients précités et de proposer une solution qui permet de réaliser une variation progressive de l'angle de dépose, pour les pièces en matériau composite réalisées par bobinage.

A cet effet, l'invention propose, selon un premier aspect, une bande multicouche destinée à être bobinée sur une forme, comprenant des couches fibreuses pré-imprégnées superposées selon une direction d'empilement, chaque couche s'étendant en largeur selon une direction transversale perpendiculaire à la direction d'empilement entre un premier et un deuxième bord, caractérisée en ce que sur au moins une partie de ladite bande multicouche les premiers bords des couches fibreuses pré-imprégnées sont alignés les uns sur les autres dans la direction de l'empilement, et chaque deuxième bord est en retrait par rapport au deuxième bord de la couche sous-jacente selon la direction transversale.

Ainsi, grâce à la réalisation d'une bande multicouche multi largeurs, on évite les changements brutaux d'angle de dépose et on s'affranchit de difficiles opérations d'usinage. Grâce à la bande multicouche, l'application de structures de rampe se fait par le bobinage d'une seule bande. Ainsi, l'opération de changement d'angle de dépose est plus rapide à réaliser et peut aisément être automatisée.

Selon une caractéristique particulière de l'invention, chaque couche fibreuse comprend une pluralité de segments, alignés les uns avec les autres suivant une direction longitudinale perpendiculaire à la direction transversale, les bords transversaux en regard étant recouverts par un segment d'une couche adjacente.

Selon une autre caractéristique particulière de l'invention, les arêtes supérieures des deuxièmes bords des couches fibreuses superposées sont comprises dans un même plan.

Selon une autre caractéristique particulière de l'invention, la bande multicouche comprend au moins une couche comprenant une première portion dans laquelle le deuxième bord de la couche est en retrait d'une première distance par rapport au deuxième bord de la couche sous-jacente, et une deuxième portion dans laquelle le deuxième bord de la couche est en retrait d'une deuxième distance par rapport au deuxième bord de la couche sous-jacente, la première distance de retrait étant supérieure à la deuxième distance de retrait.

Selon une autre caractéristique particulière de l'invention, la bande multicouche comprend au moins une couche comprenant au moins un segment dont le deuxième bord présente une distance de retrait différente de celle du deuxième bord d'un autre segment de ladite couche par rapport au deuxième bord de la couche sous-jacente.

Ainsi, une même bande multicouche peut comprendre au moins deux rampes d'angles différents, ce qui permet une variation très progressive de l'angle de dépose, et ainsi une structure avec de meilleures propriétés thermomécaniques.

L'invention vise également un procédé de fabrication de la bande multicouche, comprenant au moins :
- la formation d'un empilement de couches fibreuses pré-imprégnées selon une direction d'empilement, chaque couche s'étendant en largeur selon une direction transversale perpendiculaire à la direction d'empilement entre un premier et un deuxième bord, les premiers bords des couches étant alignés les uns sur les autres selon la direction d'empilement, chaque deuxième bord étant en retrait par rapport au deuxième bord de la couche sous-jacente selon la direction transversale,
- le chauffage de l'empilement à une température au moins égale à la température de ramollissement d'au moins une résine présente dans celles-ci,
- le compactage de l'empilement chauffé de manière à faire adhérer les couches entre elles.

L'invention vise également un procédé de fabrication d'une préforme fibreuse d'une pièce en matériau composite, comprenant au moins le bobinage de la bande multicouche.

L'invention vise également un procédé de fabrication d'une pièce en matériau composite comprenant au moins la fabrication de la préforme fibreuse, et le traitement thermique d'au moins une résine présente dans la préforme de sorte à obtenir la pièce en matériau composite.

Selon une caractéristique particulière du procédé de fabrication de la pièce en matériau composite de l'invention, la pièce est une pièce de moteur fusée, par exemple une tuyère ou une structure de véhicule spatial.

### Brève description des dessins

[Fig. 1] La figure 1 est une vue schématique et partielle en perspective d'une bande multicouche multi largeurs comprenant trois couches superposées, conformément à un mode de réalisation de l'invention.
[Fig. 2] La figure 2 est une vue schématique et partielle présentant la segmentation d'une bande multicouche multi largeurs comprenant trois couches superposées, conformément à un mode de réalisation de l'invention.
[Fig. 3] La figure 3 est une vue en coupe schématique de la bande de la figure 2 prise transversalement à la direction longitudinale de la bande.
[Fig. 4] La figure 4 est une vue schématique et partielle présentant la segmentation d'une bande multicouche en partie multi largeurs comprenant trois couches superposées, conformément à un autre mode de réalisation de l'invention.
[Fig. 5] La figure 5 est une vue schématique et partielle présentant la segmentation d'une bande multicouche multi largeurs comprenant trois couches superposées avec une variation de l'angle de la rampe, conformément à un autre mode de réalisation de l'invention.
[Fig. 6] La figure 6 est une vue en coupe schématique de la bande de la figure 5 prise transversalement à la direction longitudinale de la bande selon le plan de coupe VI.
[Fig. 7] La figure 7 est une vue en coupe schématique de la bande de la figure 5 prise transversalement à la direction longitudinale de la bande selon le plan de coupe VII.
[Fig. 8] La figure 8 est une vue en coupe schématique de la bande de la figure 5 prise transversalement à la direction longitudinale de la bande selon le plan de coupe VIII.
[Fig. 9] La figure 9 est un ordinogramme illustrant les étapes d'un procédé de fabrication d'une bande multicouche selon un mode de réalisation de l'invention.
[Fig. 10] La figure 10 est une vue en coupe schématique et partielle d'une préforme fibreuse obtenue après bobinage d'une bande multicouche autour d'une forme comprenant un changement d'angle dans le cadre d'un exemple de procédé selon l'invention, le plan de coupe comprenant l'axe autour duquel la ou les bandes ont été enroulées.
[Fig. 11] La figure 11 est une vue en coupe schématique et partielle d'une préforme fibreuse obtenue après bobinage d'une bande multicouche autour d'une forme ne comprenant pas un changement d'angle dans le cadre d'un exemple de procédé selon l'invention, le plan de coupe comprenant l'axe autour duquel la ou les bandes ont été enroulées.
[Fig. 12] La figure 12 est une vue en coupe schématique et partielle d'une préforme fibreuse comprenant deux rampes obtenue après bobinage d'une bande multicouche autour d'une forme comprenant un changement d'angle dans le cadre d'un exemple de procédé selon l'invention, le plan de coupe comprenant l'axe autour duquel la ou les bandes ont été enroulées.

### Description des modes de réalisation

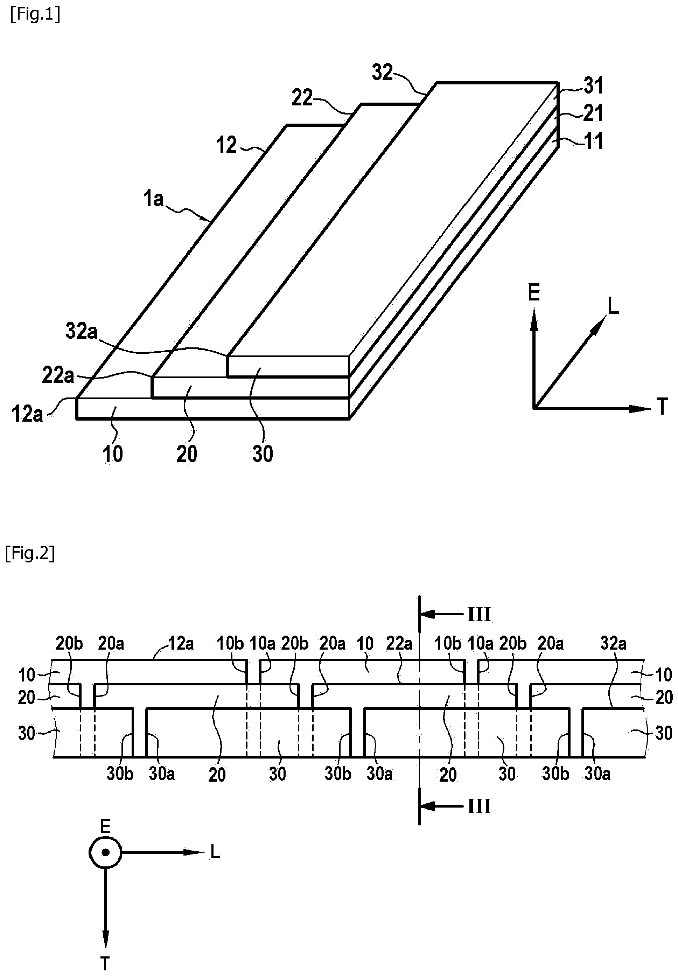

Les figures 1-3 montrent une bande multicouche comprenant trois couches superposées selon une direction d'empilement E, selon un mode de réalisation de l'invention. Comme il sera détaillé plus loin, cette bande pourra être utilisée pour fabriquer une pièce en matériau composite.

La bande multicouche 1a s'étend selon une direction longitudinale L et la direction T matérialise la direction selon la largeur de la bande 1a. La bande 1a comprend une première couche 10, s'étendant en largeur entre un premier bord 11 et un deuxième bord 12, le deuxième bord 12 possédant une arête supérieure 12a. La bande 1a comprend également une deuxième couche 20, s'étendant en largeur entre un premier bord 21 et un deuxième bord 22, dont la largeur est plus petite que la largeur de la couche 10, le deuxième bord 22 possédant une arête supérieure 22a. Ainsi, la distance entre les bords 21 et 22 est inférieure à la distance entre les bords 11 et 12. La deuxième couche 20 est superposée à la première couche 10 de sorte que les bords 11 et 21 soient alignés dans le sens de l'empilement. La bande 1a comprend une troisième couche 30, s'étendant en largeur entre un premier bord 31 et un deuxième bord 32, dont la largeur est plus petite que la largeur de la couche 20, le deuxième bord 32 possédant une arête supérieure 32a. Ainsi, la distance entre les bords 31 et 32 est inférieure à la distance entre les bords 21 et 22. La troisième couche 30 est superposée à la deuxième couche 20 de sorte que les bords 21 et 31 soient alignés dans le sens de l'empilement.

On notera que les bords longitudinaux 11, 12, 21, 22, 31 et 32 peuvent ne pas être rectilignes, mais peuvent par exemple former une ligne brisée ou une courbe. Ainsi, la valeur de la distance de retrait du deuxième bord d'une couche par rapport au deuxième bord de la couche sous-jacente peut varier dans la direction longitudinale (non représenté sur les figures 1 et 2). On notera que les bords transversaux, c'est-à-dire selon la direction T, peuvent ne pas être rectilignes, mais peuvent par exemple former une ligne brisée ou une courbe.

Dans cet exemple, les couches 10, 20 et 30 sont des tissus bidimensionnels pré-imprégnés de résine. Les couches peuvent également avoir été réalisées par tissage tridimensionnel, sous réserve que l'épaisseur finale de la bande multicouche 1a permette le bobinage. Enfin, les structures fibreuses peuvent également avoir été réalisées à partir de couches ou nappes unidirectionnelles de fibres (UD).

Les fibres des couches 10, 20 et 30 peuvent être en carbone C, en kevlar ou céramiques, par exemple en silice, en verre, en carbure de silicium SiC. Les couches 10, 20 et 30 peuvent être imprégnées d'une résine réticulable, par exemple une résine époxy, ou une résine précurseur de carbone ou de céramique, par exemple de carbure de silicium (SiC). Les couches 10, 20 et 30 peuvent également être pré-imprégnées d'une résine phénolique. Chaque couche peut être imprégnée d'une résine différente.

La bande multicouche 1a se présente d'un seul tenant. En particulier, il y a continuité et cohésion de matière entre les couches 10, 20 et 30, et notamment continuité de la résine ou des résines précurseur(s) de matrice entre elles.

La figure 2 illustre en particulier la continuité de matière de la bande 1a le long de la direction longitudinale L.

Chaque couche se décompose en segments qui sont répétés le long de la direction longitudinale L. Les segments de la première couche 10 s'étendent dans la direction longitudinale entre un premier bord transversal 10a et un deuxième bord transversal 10b. De même, les segments de la deuxième couche 20 s'étendent dans la direction longitudinale entre un premier bord transversal 20a et un deuxième bord transversal 20b, et les segments de la troisième couche 30 s'étendent dans la direction longitudinale entre un premier bord transversal 30a et un deuxième bord transversal 30b. Un segment de la troisième couche 30 recouvre au moins deux segments consécutifs de la deuxième couche 20, en recouvrant au moins le bord transversal 20a d'un segment de la couche 20 et le bord transversal 20b d'un autre segment de la couche 20. Un segment de la deuxième 20 recouvre au moins deux segments consécutifs de la première couche 10, en recouvrant au moins le bord transversal 10a d'un segment de la couche 10 et le bord transversal 10b d'un autre segment de la couche 10.

On peut veiller à ce que les bords transversaux 10a et 10b, 20a et 20b, 30a et 30b, des segments consécutifs soient suffisamment proches pour assurer la cohésion de la bande 1a, sans nécessairement se toucher. On veillera toutefois à ce que les bords transversaux 10b et 10a, 20b et 20a, 30b et 30a de segments consécutifs ne se chevauchent pas.

On notera que les bords longitudinaux 11, 12, 21, 22, 31 et 32 et les bords transversaux 10a, 10b, 20a, 20b, 30a et 30b peuvent ne pas être rectilignes, mais peuvent par exemple former une ligne brisée ou une courbe.

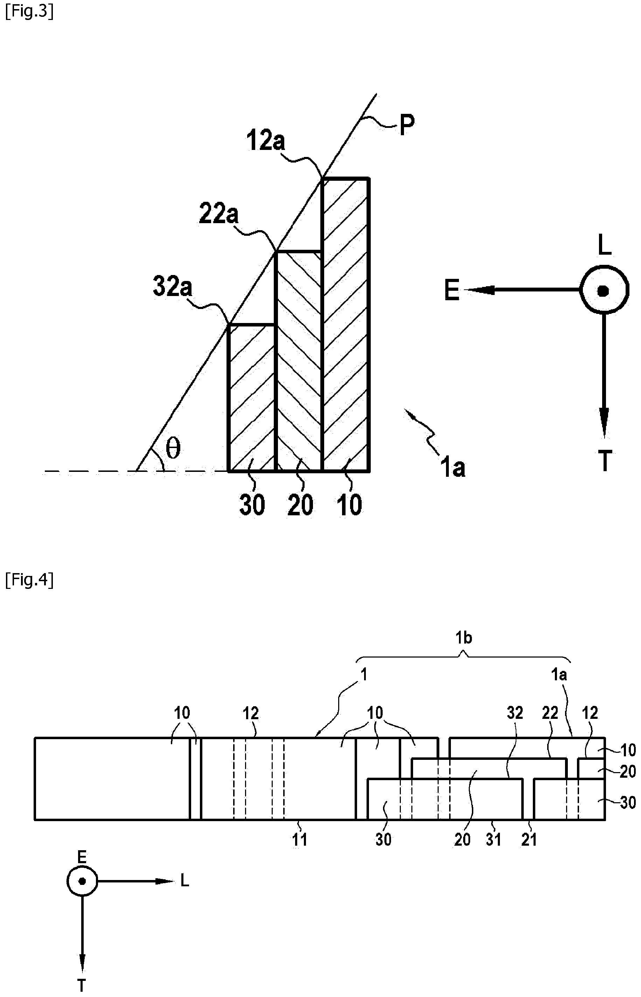

La figure 3 présente une coupe de la bande multicouche 1a, et permet de représenter la forme de rampe de la bande multicouche 1a, qui a pour angle θ.

Selon un mode particulier de l'invention, les arêtes supérieures 12a, 22a et 32a de chacune des couches 10, 20 et 30 de la bande sont inclues dans un même plan P.

Selon un mode particulier de l'invention, la bande multicouche 1a précédemment décrite peut être une partie d'une bande plus longue. Ainsi, la figure 4 présente une portion d'une bande multicouche 1b, comportant sur une première partie de sa longueur une bande multicouche 1, qui est une bande multicouche comprenant trois couches 10 de dimension identique dans la direction transversale T, soit de largeur nominale identique, et sur une deuxième partie de sa longueur une bande multicouche 1a telle que décrite précédemment avec trois couches de largeurs variables 10, 20 et 30.

Sur la première partie de la longueur de la bande multicouche 1b, la bande est constituée de la bande multicouche 1, qui comprend trois couches 10 qui s'étendent en largeur entre un premier bord 11 et un deuxième bord 12. Les premiers bords 11 sont alignés dans le sens de l'empilement, et les premiers bords 12 sont alignés dans le sens de l'empilement. Chaque couche se décompose en segments qui sont répétés le long de la direction longitudinale L. Un segment de la deuxième ou de la troisième couche couvre au moins deux segments consécutifs de la couche sous-jacente.

Afin d'effectuer la transition entre la bande multicouche 1 et la bande multicouche 1a, le premier segment de la première couche 10 de la bande multicouche 1a est placé consécutivement selon la direction longitudinale L au dernier segment de la première couche 10 de la bande multicouche 1. Le premier segment de la deuxième couche 20 de la bande multicouche 1a est placé consécutivement selon la direction longitudinale L au dernier segment de la deuxième couche 10 de la bande multicouche 1, de sorte à couvrir le dernier segment de la première couche 10 de la bande 1 et le premier segment de la première couche 10 de la bande 1a. Le premier segment de la troisième couche 30 de la bande multicouche 1a est placé consécutivement selon la direction longitudinale L au dernier segment de la troisième couche 10 de la bande multicouche 1, de sorte à couvrir le dernier segment de la deuxième couche 10 de la bande 1 et le premier segment de la deuxième couche 20 de la bande 1a. Sur la figure 4, le « premier segment » désigne le segment le plus à gauche, et le « dernier segment » désigne le segment le plus à droite. On peut veiller à ce que chaque dernier segment de la bande 1 soit suffisamment proche du premier segment de la bande 1a consécutif pour assurer la cohésion de la bande 1b, sans nécessairement le toucher. On veillera toutefois à ce que les segments consécutifs ne se chevauchent pas.

On notera que dans le cas où les segments consécutifs d'une couche se touchent, au moins deux segments consécutifs peuvent avoir été réalisés d'un seul tenant, c'est-à-dire qu'ils sont solidaires même sans être recouvert par les segments des couches adjacentes, y compris s'ils sont de largeurs différentes.

La bande multicouche 1b se présente d'un seul tenant. En particulier, il y a continuité et cohésion de matière entre la bande multicouche 1 et la bande multicouche 1a, et entre les couches 10, 20 et 30, et notamment continuité de la résine ou des résines précurseur(s) de matrice entre elles.

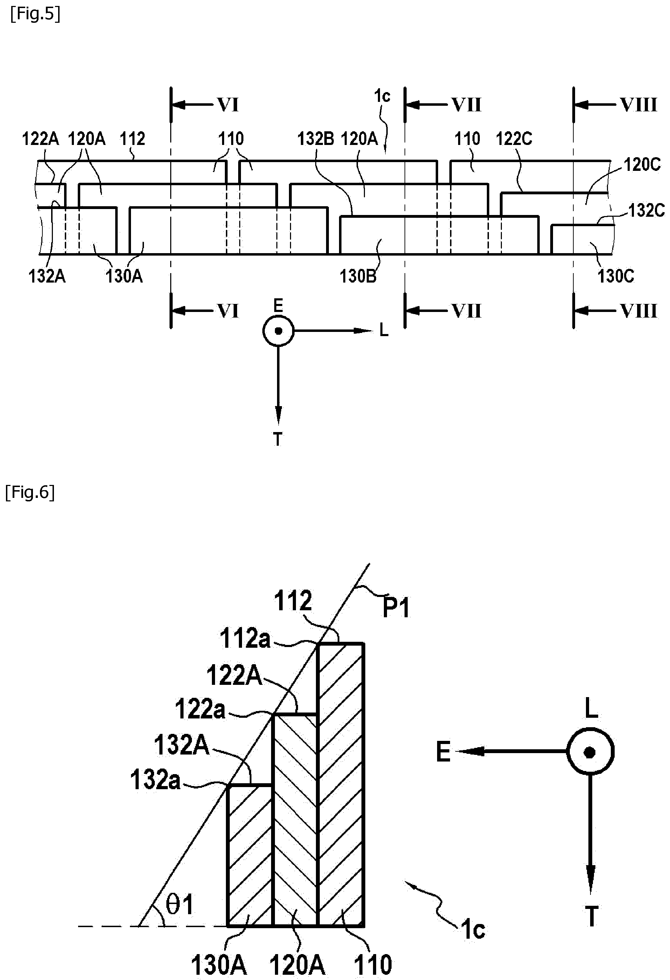

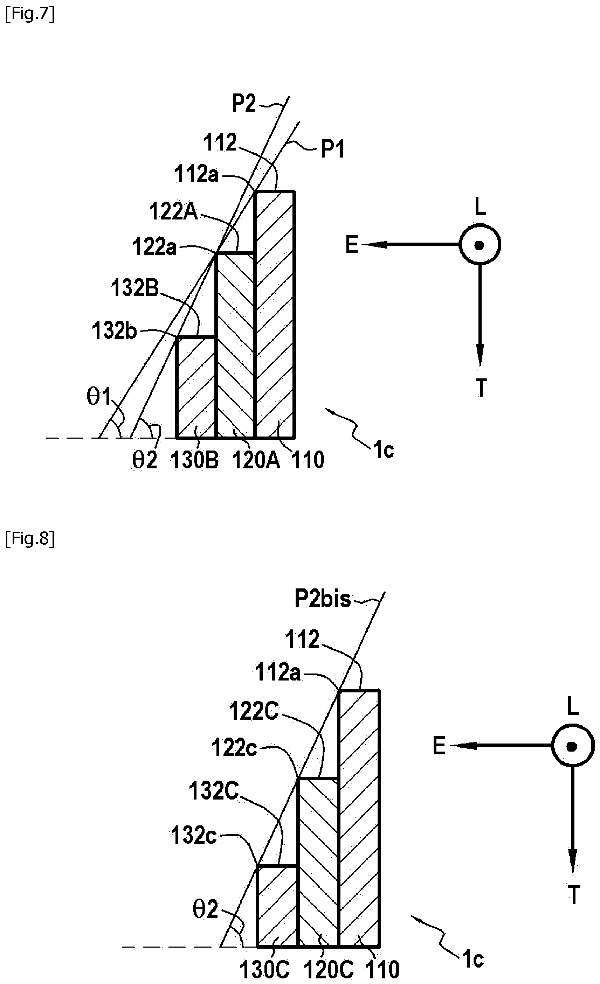

Les figures 5-8 présentent une bande multicouche selon un autre mode de réalisation de l'invention, qui permet une variation plus progressive de l'angle de la rampe formée par la bande multicouche lors du bobinage. Ainsi, si l'on souhaite obtenir une rampe d'angle θ₂, il est possible de passer par une rampe intermédiaire d'angle θ₁ inférieur à θ₂.

La bande multicouche 1c s'étend selon une direction longitudinale L et la direction T matérialise la direction selon la largeur de la bande 1c. La bande multicouche 1c comprend au moins trois couches superposées, s'étendant chacune en largeur entre un premier bord et un deuxième bord, les premiers bords de toutes les couches étant alignés selon la direction de l'empilement.

La bande multicouche 1c comprend au moins une première, une deuxième et une troisième portions consécutives dans la longueur de la bande 1c. Ainsi, chacune des portions comprend trois couches empilées. Chaque portion comprend une première couche constituée d'un ou de plusieurs segments 110, dont les deuxièmes bords 112 comportant une arête supérieure 112a.

La première portion de la bande 1c comprend une deuxième couche constituée d'un ou plusieurs segments 120A, de largeur inférieure à celle des segments 110 de la première couche, et dont les deuxièmes bords 122A comportent une arête supérieure 122a. La première portion de la bande 1c comprend également une troisième couche constituée d'un ou plusieurs segments 130A, de largeur inférieure à celle des segments 110 de la première couche et des segments 120A de la deuxième couche, et dont les deuxièmes bords 132A comportent une arête supérieure 132a. La largeur des segments 120A et 130A est choisie de sorte que les arêtes 112a, 122a et 132a soit comprises dans un même premier plan P₁ qui forme un angle θ₁ avec la direction de l'empilement. Cet angle θ₁ est l'angle de la rampe formée par la première portion de la bande multicouche 1c lors du bobinage.

La deuxième portion de la bande 1c comprend une deuxième couche constituée d'un ou plusieurs segments 120A, identiques à ceux présents dans la deuxième couche de la première portion de la bande 1c, et dont les deuxièmes bords 122A comportent une arête supérieure 122a. La première portion de la bande 1c comprend également une troisième couche constituée d'un ou plusieurs segments 130B, de largeur inférieure à celle des segments 130A de la troisième couche de la première portion de la bande 1c, et dont les deuxièmes bords 132B comportent une arête supérieure 132b. La largeur du ou des segments 130B est choisie de sorte que les arêtes 122a et 132b soit comprises dans un même deuxième plan P₂, qui forme un angle θ2 avec la direction de l'empilement. Cet angle θ₂ est l'angle final souhaité pour la rampe formée par la bande multicouche 1c lors du bobinage. Les arêtes 112a et 122a sont toujours comprises dans le premier plan P₁, qui forme un angle θ₁ avec la direction de l'empilement.

La troisième portion de la bande 1c comprend une deuxième couche constituée d'un ou plusieurs segments 120C, de largeur inférieure à celle des segments 120A de la deuxième couche de la deuxième portion de la bande 1c, et dont les deuxièmes bords 122C comportent une arête supérieure 122c. La première portion de la bande 1c comprend également une troisième couche constituée d'un ou plusieurs segments 130C, de largeur inférieure à celle des segments 130B de la troisième couche de la deuxième portion de la bande 1c, et dont les deuxièmes bords 132C comportent une arête supérieure 132c. La largeur des segments 120C et 130C est choisie de sorte que les arêtes 112a, 122c et 132c soit comprises dans un plan parallèle P₂ bis au deuxième plan P₂, qui forme un angle θ2 avec la direction de l'empilement. Cet angle θ₂ est l'angle de la rampe formée par la troisième portion de la bande multicouche 1c lors du bobinage.

On peut veiller à ce que les segments consécutifs d'une couche dans la direction longitudinale L soient suffisamment proches pour assurer la cohésion de la bande 1c, sans nécessairement le toucher. On veillera toutefois à ce que les segments consécutifs ne se chevauchent pas.

On notera que dans le cas où les segments consécutifs d'une couche se touchent, au moins deux segments consécutifs peuvent avoir été réalisés d'un seul tenant, c'est-à-dire qu'ils sont solidaires même sans être recouvert par les segments des couches adjacentes, y compris s'ils sont de largeurs différentes.

Les structures et matériaux possibles pour les couches de la bande multicouche 1c sont identiques à ceux des descriptions précédentes.

On a décrit des exemples de bandes à trois couches superposées mais on ne sort, bien entendu, pas du cadre de l'invention si les bandes comprennent plus de trois couches superposées, sous réserve que l'épaisseur finale de la bande multicouche permette le bobinage. Dans le cas où plus de trois couches sont superposées, chaque couche supplémentaire superposée doit avoir une largeur inférieure à la couche sous-jacente.

Dans les exemples des bandes à trois couches 1a et 1b, on ne sort pas du cadre de l'invention si les bandes comprennent seulement deux couches superposées.

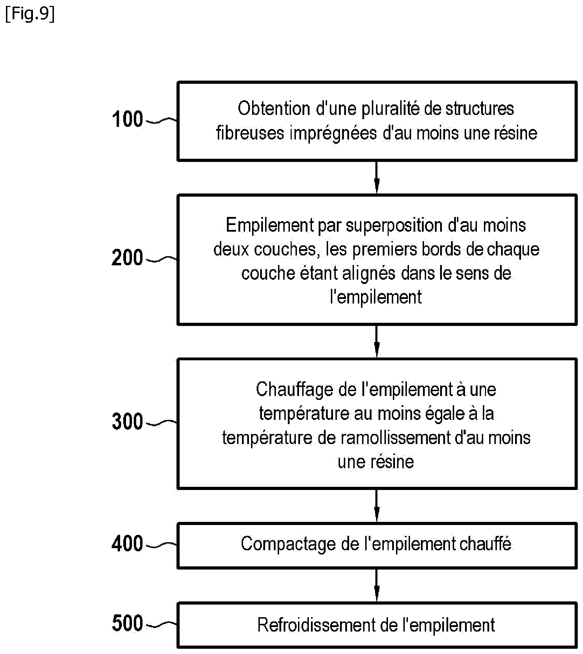

Un procédé de fabrication d'une bande multicouche selon l'invention va maintenant être décrit en lien avec l'ordinogramme de la figure 9.

Une première étape 100 consiste à obtenir une pluralité de structures fibreuses pré-imprégnées d'au moins une résine.

Dans cet exemple, les structures fibreuses sont des tissus bidimensionnels. Cependant, on ne sort pas du cadre de l'invention si les structures fibreuses ont une structure différente, comme expliqué dans les précédents modes de réalisation. Les matériaux possibles pour réaliser ces structures fibreuses sont également décrits dans les précédents modes de réalisation.

Une deuxième étape 200 consiste à réaliser des couches à partir des structures fibreuses créées précédemment et de les empiler par superposition comme décrit dans les précédents modes de réalisation. Ainsi, l'empilement comprend au minimum deux des trois couches décrites sur les figures 1-3.

Dans une troisième étape 300 on chauffe l'empilement réalisé à l'étape 200 à une température au moins égale à la température de ramollissement d'au moins une résine contenue dans l'empilement. Puis, dans une étape 400 on va compacter l'empilement ainsi chauffé pour faire adhérer les couches empilées entre elles. La résine ramollie peut ainsi faire faire adhérer les couches entre elles. On notera que la température de ramollissement est une température à laquelle la résine se liquéfie légèrement sans polymériser ou réticuler. Les étapes de chauffage 300 et de compactage 400 peuvent être réalisées simultanément, dans une presse chauffante par exemple.

Une possibilité pour réaliser les étapes 200, 300 et 400 est d'utiliser un dispositif tel que décrit dans le document EP3418046, comprenant un convoyeur, deux dispositifs de chargement et une presse chauffante, ou comprenant une étape de placement des couches robotisées.

Dans l'étape 500 on refroidit l'empilement ainsi chauffé et compacté de façon à obtenir une bande multicouche destinée à être bobinée.

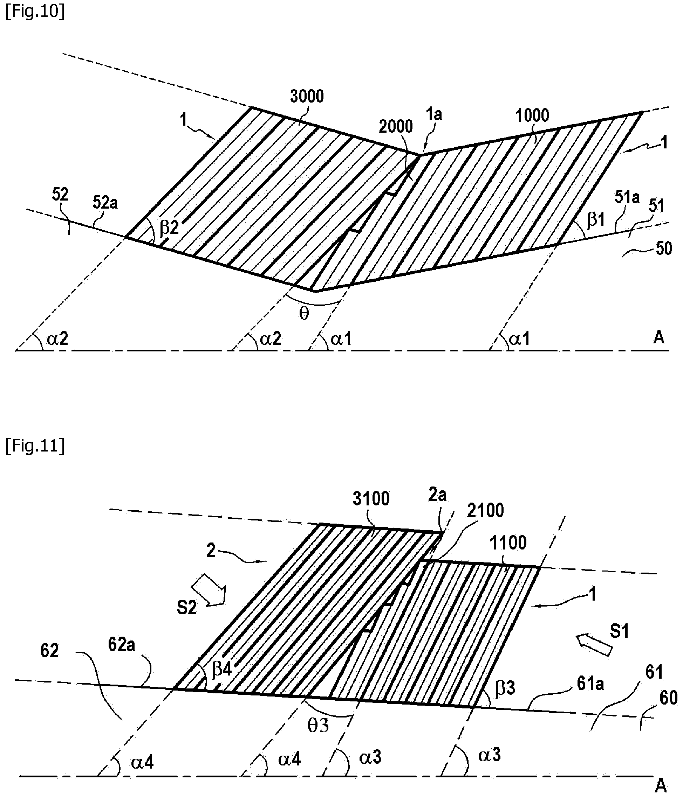

La figure 10 schématise une préforme fibreuse obtenue après bobinage d'une bande multicouche sur une forme présentant un changement d'angle dans le cadre d'un exemple de procédé selon l'invention.

La bande multicouche 1a, 1b ou 1c est mise en œuvre par bobinage autour d'un outillage de bobinage 50, d'axe de révolution A qui est également l'axe de bobinage. Cet outillage de bobinage se décompose en une première sous-forme 51, pour laquelle un premier angle de stratification β₁ serait satisfaisant, et une deuxième sous-forme 52, pour laquelle un deuxième angle de stratification β₂ serait satisfaisant.

On commence par procéder à un premier bobinage 1000. On enroule une bande avec une largeur nominale sur la surface 51a, selon le premier angle de stratification β₁. Cette bande peut être une bande composée d'une seule couche, ou une bande multicouche comme celle décrite dans le document EP3418046B1. Toutefois, cette bande conserve une largeur nominale fixe. On enroule ensuite la bande avec une largeur nominale autour de l'axe de révolution A selon un premier angle de dépose fixe α₁ en se déplaçant vers la surface opposée, c'est-à-dire vers la gauche sur le dessin, jusqu'à recouvrir en partie la surface 51a de l'outillage. Dans le cas de surfaces non-développables, le procédé décrit dans le document US2019160760A1 peut être mis en œuvre.

On effectue ensuite un deuxième bobinage 2000, en enroulant la bande multicouche de l'invention, la ou les couches supérieures de la bande multicouche ayant une largeur inférieure à la largeur nominale de la bande précédente, et formant une structure de rampe d'angle θ. Plus précisément, le deuxième bobinage 2000 s'appuie sur le premier bobinage 1000, soit toujours selon le premier angle de dépose α₁.

On procède ensuite à un troisième bobinage 3000 en reprenant une bande avec une largeur nominale, en s'appuyant sur la bande multicouche précédemment bobinée. Ainsi, le troisième bobinage se fera selon un deuxième angle de dépose fixe α₂, correspondant à la valeur du premier angle de dépose α₁ retranché de la valeur de l'angle θ de la bande multicouche introduite, soit α₂ = α₁ - θ. Le troisième bobinage se fera ainsi selon le deuxième angle de stratification β₂.

On obtient ainsi une préforme en plusieurs étapes d'enroulement. On ne sort pas du cadre de l'invention si le bobinage 2000 de la bande multicouche est réalisé lors du même enroulement que le premier ou le deuxième bobinage de la bande de largeur nominale, par exemple en utilisant une bande multicouche 1b, décrite précédemment. Il est également possible de réaliser les trois étapes de bobinage 1000, 2000 et 3000 lors du même enroulement, en utilisant une bande multicouche adaptée sur le modèle de la bande multicouche 1b.

On ne sort pas non plus du cadre de l'invention si les bandes utilisées pour les bobinages 1000 et 3000 ont des largeurs nominales différentes, par exemple pour optimiser l'épaisseur de la pièce.

La pièce peut alors être obtenue par traitement thermique de la préforme obtenue, par exemple afin de faire polymériser ou réticuler les résines(s) présentes.

La figure 11 schématise une préforme fibreuse obtenue après bobinage d'une bande multicouche dans le cadre d'un exemple de procédé selon l'invention. Dans cet exemple, la pièce obtenue par traitement thermique de la préforme fibreuse est destinée à subir une première sollicitation dans une première partie de la longueur de la pièce, et une deuxième sollicitation différente dans une deuxième partie de la longueur de la pièce.

Une bande multicouche selon l'invention est mise en œuvre par bobinage autour d'un outillage de bobinage 60, d'axe de révolution A qui est également l'axe de bobinage.

La première sollicitation S1 s'appliquera sur une première partie 61 de la longueur de la préforme située à droite sur le dessin, face à laquelle l'angle β₃ est un angle de stratification satisfaisant. Une deuxième sollicitation S2, dirigée selon un angle différent et de plus grande importance, s'appliquera sur une deuxième partie 62 de la longueur de la préforme située à gauche sur le dessin, et face à laquelle l'angle β₂ est un angle de stratification satisfaisant.

On commence par procéder à un premier bobinage 1100. On enroule une bande 1 avec une première largeur nominale sur la surface 51a, selon le premier angle de stratification β₃. Cette bande peut être une bande composée d'une seule couche, ou une bande multicouche comme celle décrite dans le document EP3418046B1. Toutefois, cette bande conserve une largeur nominale fixe. On enroule ensuite la bande avec la première largeur nominale autour de l'axe de révolution A selon un premier angle de dépose fixe α₃ en se déplaçant vers la surface opposée, c'est-à-dire vers la gauche sur le dessin jusqu'à recouvrir la surface 61a de l'outillage.

On effectue ensuite un deuxième bobinage 2100, en enroulant la bande multicouche de l'invention, la ou les couches supérieures de la bande multicouche ayant une largeur inférieure à la largeur nominale de la bande précédente, et formant une structure de rampe d'angle θ₃. Plus précisément, le deuxième bobinage 2000 s'appuie sur le premier bobinage 1100, soit toujours selon le premier angle de dépose α₃. Dans l'exemple présenté ici, la bande multicouche 2a selon l'invention comprend quatre couches superposées.

On procède ensuite à un troisième bobinage 3100 en mettant en œuvre une bande 2 avec une deuxième largeur nominale, en s'appuyant sur la bande multicouche 2a précédemment bobinée. La sollicitation S2 étant plus importante que la sollicitation S1, une épaisseur plus importante est nécessaire. Ainsi, la deuxième largeur nominale de la bande 2 est plus importante que la première largeur nominale de la bande 1. Ainsi, le troisième bobinage se fera selon un deuxième angle de dépose fixe α₄, correspondant à la valeur du premier angle de dépose α₃ retranché de la valeur de l'angle θ₃ de la bande multicouche introduite, soit α₄ = α₃ - θ₃. Le troisième bobinage se fera ainsi selon le deuxième angle de stratification β₄.

La pièce peut alors être obtenue par traitement thermique de la préforme obtenue, par exemple afin de faire polymériser ou réticuler les résines(s) présentes.

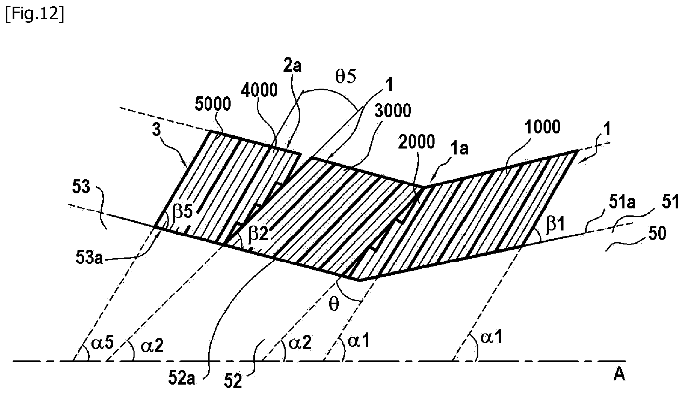

La figure 12 schématise une préforme fibreuse obtenue après bobinage d'une bande multicouche autour d'une forme comprenant un changement d'angle dans le cadre d'un exemple de procédé selon l'invention. Dans cet exemple, on fait varier deux fois l'angle de dépose au cours du bobinage de la préforme.

Une bande multicouche selon l'invention est mise en œuvre par bobinage autour d'un outillage de bobinage 50, d'axe de révolution A qui est également l'axe de bobinage.

On commence par procéder à trois bobinages 1000, 2000 et 3000 comme décrit dans le mode de réalisation de la figure 10. On souhaite ensuite modifier à nouveau l'angle de stratification, par exemple pour s'adapter à de nouvelles sollicitations sur la partie 53 de la forme 50.

On procède ainsi à un quatrième bobinage 4000, en enroulant la bande multicouche de l'invention, la ou les couches supérieures de la bande multicouche ayant une largeur inférieure à la largeur nominale de la bande précédente, et formant une structure de rampe d'angle θ₅. Plus précisément, le quatrième bobinage 4000 s'appuie sur le troisième bobinage 3000, soit selon l'angle de dépose α₂. Dans l'exemple présenté ici, la bande multicouche 2a selon l'invention comprend quatre couches superposées.

On procède ensuite à un cinquième bobinage 5000 en mettant en œuvre une bande 3, en s'appuyant sur la bande multicouche 2a précédemment bobinée. Le troisième bobinage se fait selon un angle de dépose fixe α₅, correspondant à la somme de la valeur de l'angle de dépose α₂ et de la valeur de l'angle θ₅ de la bande multicouche introduite 2a, soit α₅ = α₂ + θ₅. Le cinquième bobinage se fera ainsi selon un angle de stratification β₅.

La pièce peut alors être obtenue par traitement thermique de la préforme obtenue, par exemple afin de faire polymériser ou réticuler les résines(s) présentes.

## Revendications

1. Bande multicouche (1a ; 1b ; 1c) destinée à être bobinée sur une forme, comprenant des couches fibreuses pré-imprégnées (10, 20, 30) superposées selon une direction d'empilement (E), chaque couche s'étendant en largeur selon une direction transversale (T) perpendiculaire à la direction d'empilement entre un premier (11, 21, 31) et un deuxième (12, 22, 32) bord, **caractérisée en ce que** sur au moins une partie de ladite bande multicouche les premiers bords des couches fibreuses pré-imprégnées sont alignés les uns sur les autres dans la direction de l'empilement, et chaque deuxième bord est en retrait par rapport au deuxième bord de la couche sous-jacente selon la direction transversale.

2. Bande multicouche (1a ; 1b ; 1c) selon la revendication 1, dans laquelle chaque couche fibreuse (10, 20, 30) comprend une pluralité de segments, alignés les uns avec les autres suivant une direction longitudinale (L) perpendiculaire à la direction transversale (T), les bords transversaux (10a, 10b, 20a, 20b, 30a, 30b) en regard étant recouverts par un segment d'une couche adjacente.

3. Bande multicouche (1a ; 1b) selon la revendication 1 ou 2, dans laquelle les arêtes supérieures (12a, 22a, 32a) des deuxièmes bords (12, 22, 32) des couches fibreuses (10, 20, 30) superposées sont comprises dans un même plan (P).

4. Bande multicouche selon la revendication 1, qui comprend au moins une couche comprenant une première portion dans laquelle le deuxième bord de la couche est en retrait d'une première distance par rapport au deuxième bord de la couche sous-jacente, et une deuxième portion dans laquelle le deuxième bord de la couche est en retrait d'une deuxième distance par rapport au deuxième bord de la couche sous-jacente, la première distance de retrait étant supérieure à la deuxième distance de retrait.

5. Bande multicouche selon la revendication 2 (1b ; 1c), qui comprend au moins une couche (20, 30) comprenant au moins un segment (130B, 120C, 130C) dont le deuxième bord (132B, 122C, 132C) présente une distance de retrait différente de celle du deuxième bord d'un autre segment de ladite couche par rapport au deuxième bord de la couche sous-jacente.

6. Procédé de fabrication d'une bande multicouche (1a ; 1b ; 1c) selon l'une quelconque des revendications 1 à 5, le procédé comprenant au moins :
- la formation d'un empilement de couches fibreuses pré-imprégnées (10, 20, 30) selon une direction d'empilement (E), chaque couche s'étendant en largeur selon une direction transversale (T) bord, les premiers bords (11, 21, 31) des couches étant alignés les uns sur les autres selon la direction d'empilement, chaque deuxième bord (12, 22, 32) étant en retrait par rapport au deuxième bord de la couche sous-jacente selon la direction transversale,
- le chauffage de l'empilement à une température au moins égale à la température de ramollissement d'au moins une résine présente dans celles-ci,
- le compactage de l'empilement chauffé de manière à faire adhérer les couches entre elles.

7. Procédé de fabrication d'une préforme fibreuse d'une pièce en matériau composite, comprenant au moins le bobinage de la bande multicouche (1a ; 1b ; 1c) selon l'une quelconque des revendications 1 à 5.

8. Procédé de fabrication d'une pièce en matériau composite comprenant au moins la fabrication d'une préforme fibreuse par mise en œuvre d'un procédé selon la revendication 7, et le traitement thermique d'au moins une résine présente dans la préforme de sorte à obtenir la pièce en matériau composite.

9. Procédé selon la revendication 8, dans lequel la pièce est une pièce de moteur fusée, par exemple une tuyère ou une structure de véhicule spatial.

## Patentansprüche

1. Mehrschichtiges Band (1a; 1b; 1c), das dazu bestimmt ist, auf einer Form aufgewickelt zu werden, umfassend vorimprägnierte Faserschichten (10, 20, 30), die entlang einer Stapelrichtung (E) übereinandergelegt sind, wobei sich jede Schicht in der Breite entlang einer Querrichtung (T) senkrecht zu der Stapelrichtung zwischen einem ersten (11, 21, 31) und einem zweiten (12, 22, 32) Rand erstreckt, **dadurch gekennzeichnet, dass** auf mindestens einem Teil des mehrschichtigen Bands die ersten Ränder der vorimprägnierten Faserschichten in Stapelrichtung aufeinander ausgerichtet sind, und jeder zweite Rand in der Querrichtung gegenüber dem zweiten Rand der darunter liegenden Schicht zurückversetzt ist.

2. Mehrschichtiges Band (1a; 1b; 1c) nach Anspruch 1, wobei jede Faserschicht (10, 20, 30) eine Vielzahl von Segmenten umfasst, die entlang einer Längsrichtung (L) senkrecht zu der Querrichtung (T) aneinander ausgerichtet sind, wobei die gegenüberliegenden Querränder (10a, 10b, 20a, 20b, 30a, 30b) von einem Segment einer benachbarten Schicht bedeckt sind.

3. Mehrschichtiges Band (1a; 1b) nach Anspruch 1 oder 2, wobei die oberen Kanten (12a, 22a, 32a) der zweiten Ränder (12, 22, 32) der übereinanderliegenden Faserschichten (10, 20, 30) in einer gleichen Ebene (P) liegen.

4. Mehrschichtiges Band nach Anspruch 1, das mindestens eine Schicht umfasst, umfassend einen ersten Abschnitt, in dem der zweite Rand der Schicht um einen ersten Abstand von dem zweiten Rand der darunter liegenden Schicht zurückversetzt ist, und einen zweiten Abschnitt, in dem der zweite Rand der Schicht um einen zweiten Abstand von dem zweiten Rand der darunter liegenden Schicht zurückversetzt ist, wobei der erste Zurückversetzungsabstand größer ist als der zweite Zurückversetzungsabstand.

5. Mehrschichtiges Band nach Anspruch 2 (1b; 1c), das mindestens eine Schicht (20, 30) umfasst, umfassend mindestens ein Segment (130B, 120C, 130C), dessen zweiter Rand (132B, 122C, 132C) einen anderen Zurückversetzungsabstand als der zweite Rand eines anderen Segments der Schicht von dem zweiten Rand der darunter liegenden Schicht aufweist.

6. Verfahren zur Herstellung eines mehrschichtigen Bands (1a; 1b; 1c) nach einem der Ansprüche 1 bis 5, das Verfahren mindestens umfassend:
- Bilden eines Stapels aus vorimprägnierten Faserschichten (10, 20, 30) entlang einer Stapelrichtung (E), wobei sich jede Schicht in der Breite entlang eines Rands in Querrichtung (T) erstreckt, wobei die ersten Ränder (11, 21, 31) der Schichten entlang der Stapelrichtung zueinander ausgerichtet sind, wobei jeder zweite Rand (12, 22, 32) in der Querrichtung gegenüber dem zweiten Rand der darunter liegenden Schicht zurückversetzt ist.
- Erhitzen des Stapels auf eine Temperatur, die mindestens der Erweichungstemperatur von mindestens einem darin vorhandenen Harz entspricht,
- Verdichten des erhitzten Stapels, um die Schichten aneinander anzuhaften.

7. Verfahren zur Herstellung eines Faservorformlings eines Teils aus Verbundmaterial, umfassend mindestens das Aufwickeln des mehrschichtigen Bands (1a; 1b; 1c) nach einem der Ansprüche 1 bis 5.

8. Verfahren zur Herstellung eines Teils aus Verbundmaterial, umfassend mindestens die Herstellung eines Faservorformlings durch Durchführung eines Verfahrens nach Anspruch 7 und die Wärmebehandlung mindestens eines in dem Vorformling vorhandenen Harzes, um das Teil aus Verbundmaterial zu erlangen.

9. Verfahren nach Anspruch 8, wobei das Teil ein Teil eines Raketentriebwerks ist, z. B. eine Düse oder eine Struktur eines Weltraumfahrzeugs.

## Claims

1. A multilayer strip intended to be wound on a form, comprising pre-impregnated fiber layers superimposed along a stacking direction, each layer extending widthwise along a transverse direction perpendicular to the stacking direction between a first and a second edge, **characterized in that** on at least a portion of said multilayer strip the first edges of the pre-impregnated fiber layers are aligned with each other in the stacking direction, and each second edge is recessed relative to the second edge of the underlying layer in the transverse direction.

2. The multilayer strip according to claim 1, wherein each fiber layer comprises a plurality of segments, aligned with each other in a longitudinal direction perpendicular to the transverse direction, the facing transverse edges being covered by a segment of an adjacent layer.

3. A multilayer strip according to claim 1, wherein the upper ridges of the second edges of the superimposed fiber layers are comprised in the same plane.

4. The multilayer strip according to claim 1, which comprises at least one layer comprising a first portion in which the second edge of the layer is recessed by a first distance relative to the second edge of the underlying layer, and a second portion in which the second edge of the layer is recessed by a second distance relative to the second edge of the underlying layer, the first recess distance being greater than the second recess distance.

5. The multilayer strip according to claim 2, which comprises at least one layer comprising at least one segment the second edge of which has a recess distance different from that of the second edge of another segment of said layer relative to the second edge of the underlying layer.

6. A method for manufacturing a multilayer strip according to claim 1, the method comprising at least:
- forming a stack of pre-impregnated fiber layers along a stacking direction, each layer extending widthwise along a transverse direction edge, the first edges of the layers being aligned with each other in the stacking direction, each second edge being recessed relative to the second edge of the underlying layer in the transverse direction,
- heating the stack to a temperature at least equal to the softening temperature of at least one resin present therein,
- compacting the heated stack so as to make the layers adhere to each other.

7. The method for manufacturing a fiber preform of a composite material part, comprising at least the winding of the multilayer strip according to claim 1.

8. A method for manufacturing a composite material part comprising at least the manufacture of a fiber preform by implementing the method according to claim 7, and the heat treatment of at least one resin present in the preform so as to obtain the composite material part.

9. The method according to claim 8, wherein the part is a rocket engine part, for example a nozzle or a space vehicle structure.
